(19) Europäisches Patentamt / European Patent Office / Office européen des brevets

(11) **EP 3 056 841 B1**

(12) **EUROPEAN PATENT SPECIFICATION**

(45) Date of publication and mention
of the grant of the patent:
**13.04.2022 Bulletin 2022/15**

(21) Application number: **16154466.3**

(22) Date of filing: **05.02.2016**

(51) International Patent Classification (IPC):
**F25B 49/02** *(2006.01)*

(52) Cooperative Patent Classification (CPC):
**F25B 49/027; F25B 41/34;** F25B 49/022;
F25B 2341/063; F25B 2600/0253; F25B 2600/17;
F25B 2600/19; F25B 2600/2513; F25B 2700/195;
F25B 2700/2116; Y02B 30/70

(54) **CONTROL METHOD FOR AIR-CONDITIONING SYSTEM HAVING ELECTRONIC EXPANSION VALVE**

STEUERUNGSVERFAHREN FÜR KLIMAANLAGE MIT ELEKTRONISCHEM EXPANSIONSVENTIL

PROCÉDÉ DE COMMANDE POUR SYSTÈME DE CLIMATISATION AYANT UNE SOUPAPE DE DÉTENTE ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.02.2015 CN 201510078455**

(43) Date of publication of application:
**17.08.2016 Bulletin 2016/33**

(73) Proprietor: **Zhejiang Sanhua Automotive Components Co., Ltd.**
**Zhejiang 310018 (CN)**

(72) Inventors:
• **ZHANG, Genxiang**
**310018 HANGZHOU (CN)**
• **ZHANG, Rongrong**
**310018 HANGZHOU (CN)**
• **LU, Yingchong**
**310018 HANGZHOU (CN)**

(74) Representative: **Lavoix**
**Bayerstraße 83**
**80335 München (DE)**

(56) References cited:
**WO-A1-2014/117721      US-A1- 2010 064 723**
**US-A1- 2014 260 381**

## Description

## FIELD

This application relates to a control method for an air-conditioning system with an electronic expansion valve.

## BACKGROUND

US 2010/064723 A1 discloses a refrigeration system comprising: a refrigerant circuit in which a compressor, an air-cooled condenser, a water-cooled condenser, an electronic expansion valve, and an evaporator are connected and through which a refrigerant is circulated to operate a refrigeration cycle and an air-cooled condenser fan for supplying air to the air-cooled condenser.

WO 2014/117721 A1 relates to an electronic expansion valve of an air-conditioning system, comprising a valve body and an expansion valve controller; the valve body comprises a refrigerant channel, a valve pin, and a stepping motor; the stepping motor controls the movement of the valve pin to adjust the size of the opening of the refrigerant channel; the expansion valve controller outputs different control signals according to different operation conditions of the electronic expansion valve; inputting different current to the stepping motor so as to drive the stepping motor to rotate; and controlling the movement of the valve pin to adjust the size of the refrigerant channel.

Currently, many air-conditioning systems use an electronic expansion valve (abbreviated as EXV) to accurately control a refrigerating pressure. The electronic expansion valve can adjust a flow rate of the refrigerant by adjusting an opening thereof, to further control the refrigerating pressure within an appropriate range, so as to allow the air-conditioning systems to reach an optimum performance. In a general method for controlling the refrigerating pressure by the electronic expansion valve, a current refrigerating pressure of the refrigerant and a refrigerating temperature of a gas cooler are provided as input signals of the electronic expansion valve to a control unit of the electronic expansion valve, and the control unit determines, according to a refrigerating temperature of the gas cooler, an optimum refrigerating pressure range corresponding to the refrigerating temperature, and then compares the current refrigerating pressure of the refrigerant with the optimum refrigerating pressure range. If the current refrigerating pressure of the refrigerant is outside the optimum refrigerating pressure range, the control unit adjusts the opening by a PID (namely proportion integration differentiation) adjustment, thereby adjusting the flow rate of the refrigerant to adjust the refrigerating pressure of the refrigerant within the optimum refrigerating pressure range. For example, in the case that the current refrigerating pressure of the refrigerant is lower than a lower limit of the optimum refrigerating pressure range, the opening may be reduced to increase the pressure; and in the case that the current refrigerating pressure of the refrigerant is higher than an upper limit of the optimum refrigerating pressure range, the opening may be increased to reduce the pressure.

In an air-conditioning system adopting a conventional refrigerant such as R134a (tetrafluoroethane), the refrigerating pressure of the refrigerant may generally not exceed 2.5MPa, and in most cases, the electronic expansion valve may keep an effective control of the refrigerating pressure of the refrigerant just through adjusting the opening by the PID adjustment. However, in an air-conditioning system taken carbon dioxide ($CO_2$) as the refrigerant, if the refrigerating temperature is greater than 40 degrees Celsius, an optimum refrigerating pressure of $CO_2$ is generally around 12MPa, which is approximate to an ultimate operating pressure of the system. A practical refrigerating pressure may further fluctuate with a dynamic operation of the system, and when the refrigerating pressure reaches around 14MPa, the refrigerating pressure may reach the ultimate operating pressure of the air-conditioning system, and at this time, the refrigerating pressure cannot be reduced timely through the electronic expansion valve, and a high pressure protection function of a compressor of the air-conditioning system is required to activate, thus the refrigerating pressure can be reduced timely, and safety of the air-conditioning system can be ensured. Especially for a vehicle air-conditioning system taken $CO_2$ as the refrigerant, in the acceleration process of the vehicle, a rotational speed of the compressor may abruptly increase, and at this time, the temperature abruptly rises, and the refrigerating pressure also rapidly increases, which easily causes the refrigerating pressure of the air-conditioning system to reach the ultimate pressure value and forces the air-conditioning system to take further emergency pressure-reducing measures, for example, activating the high pressure protection function of the compressor, and even further activating a physical pressure relief function. If the speed of the vehicle changes frequently in a short time (for example, in the case that the vehicle passes a road section with many traffic lights), the refrigerating pressure of the air-conditioning system may reach the ultimate pressure for several times, thus the high pressure protection function of the compressor and even the physical pressure relief function may be required to frequently activate. Since a mechanical inertia of the compressor is large, force moments for starting or stopping the compressor are large, and time for starting or stopping is also long, frequently activating and deactivating the high pressure protection function of the compressor may adversely affect the performance of the air-conditioning system, and shorten a service life of the compressor. And damage of the physical pressure relief function to the air-conditioning system is particularly obvious, and once the physical pressure relief function is activated, the whole air-conditioning system subsequently may need to be maintained.

Therefore, it is necessary to make several improvements the conventional technology, to address the above technical issues.

## SUMMARY

An object of the present application is to provide a control method for an air-conditioning system, through which a refrigerating pressure of the air-conditioning system can be more securely, effectively, rapidly and steadily adjusted.

To achieve the above object, there is provided a control method for an air-conditioning system according to the appended set of claims.

Compared with the conventional technology, the control method for the air-conditioning system according to the present application can take different depressurization measures to timely lower the pressure respectively when the refrigerating pressure of the air-conditioning system is within different ranges, and decrease a number of times of the air-conditioning system being forced to activate a high pressure protection function and even a physical pressure relief function, thus the refrigerating pressure of the air-conditioning system can be more securely, more effectively, more quickly and more steadily adjusted.

## BRIEF DESCRIPTION OF THE DRAWINGS

Figure 1 is a schematic view showing the structure of an air-conditioning system according to the embodiment of the present invention;
Figure 2 is a schematic flow showing main working stages of the air-conditioning system in Figure 1;
Figure 3 is a flow chart of an initialization stage of the control method for the air-conditioning system according to this embodiment;
Figure 4 is a flow chart of a startup and lowing temperature stage of the control method for the air-conditioning system according to this embodiment;
Figure 5 is a flow chart of a steady-state operation stage of the control method for the air-conditioning system according to this embodiment;
Figure 6 is a flow chart of a dynamic adjustment stage of the control method for the air-conditioning system according to this embodiment;
Figure 7 is a schematic view showing the relationship between an opening of an electronic expansion valve and time in the case that the control method for the air-conditioning system according to this embodiment controls the electronic expansion valve; and
Figure 8 is a schematic view showing the relationship between the opening of the electronic expansion valve and time in the case that the conventional control method for the air-conditioning system controls the electronic expansion valve.

## DETAILED DESCRIPTION

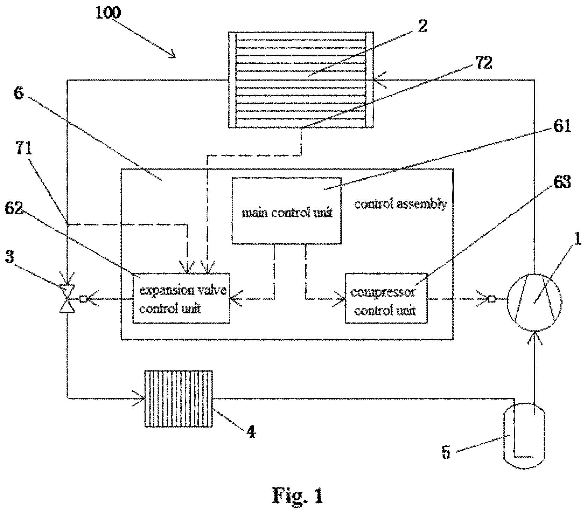

Referring to Figure 1, a control method for an air-conditioning system is provided according to an embodiment of the present application. The control method is applicable to an air-conditioning system 100, and can be applied to adjust a refrigerating pressure in the air-conditioning system 100. The air-conditioning system 100 may be a vehicle air-conditioning system adopting $CO_2$ (carbon dioxide) as the refrigerant. The air-conditioning system 100 includes a compressor 1, a heating device 2, an electronic expansion valve (EXV) 3, a cooling device 4, a reservoir 5, and a control assembly 6. The compressor 1, the heating device 2, the electronic expansion valve 3, the cooling device 4 and the reservoir 5 are connected in order, and the reservoir 5 is connected backward to the compressor 1, to form a refrigerant circulation loop, for example, use the an evaporator to be the cooling device 4for cooling, use a gas cooler to be the heating device 2 for heating. The refrigerant circulates along the refrigerant circulation loop for refrigerating, and, the electronic expansion valve 3 adjusts a flow rate of the refrigerant. The control assembly 6 includes a main control unit 61, an expansion valve control unit 62 connected to the main control unit 61 and the electronic expansion valve 3, and a compressor control unit 63 connected to the main control unit 61 and the compressor 1. The expansion valve control unit 62 may be a PID (Proportion Integration Differentiation) controller, and the main control unit 61 and the compressor control unit 63 may be a data processor such as a single chip microcomputer. A control target pressure value of the air-conditioning system 100 is set in the main control unit 61, and the control target pressure value refers to a refrigerant pressure value at which the air-conditioning system 100 is allowed to reach an optimum working efficiency. A fine adjustment pressure range, an alert pressure range and an ultimate pressure range of the refrigerant pressure are further set in the main control unit 61 in order from low to high. The fine adjustment pressure range is a pressure range in which timely pressure relief can be ensured just by the electronic expansion valve 3 adopting the conventional PID adjustment, and the control target pressure value is also within the fine adjustment pressure range. The alert pressure range is a pressure range within which timely pressure relief can be ensured only when the electronic expansion valve 3 increases a pressure adjusting speed. The ultimate pressure range is a pressure range within which the pressure relief cannot be realized only by the electronic expansion valve 3, and it is necessary to take other emergency pressure relief measures. In this embodiment, according to common properties of the vehicle air-conditioning system taking $CO_2$ as the refrigerant, in manufacturing the air-conditioning system 100, an initial fine adjustment pressure range thereof is set to range from 6Mpa to 13Mpa, an initial alert pressure range is set to range from 13Mpa to 14Mpa, and an initial ultimate pressure range is set to be above 14Mpa. Apparently, in other embodiments, these pressure ranges may also be adjusted according to specific working conditions. In addition, in subsequent using process of the method according to this embodiment, these pressure ranges may be adjusted to a certain degree according to present specific working conditions.

In addition, the air-conditioning system 100 further includes a pressure sensor 71, and a temperature sensor 72, which are respectively configured to acquire refrigerant pressure data at a predetermined position and temperature data at a predetermined position in the air-conditioning system 100. In this embodiment, the pressure sensor 71 is mounted at an inlet of the electronic expansion valve 3, or is mounted in a refrigerant pipeline at a certain distance before the inlet, configured to measure a pressure at the inlet of the electronic expansion valve 3 or a pressure before the inlet of the electronic expansion valve 3 as required pressure data; the temperature sensor 72 is mounted at an air inlet of the heating device 2, and is configured to acquire in real time the temperature at the air inlet of the heating device 2 as the required temperature data. In other embodiments, the refrigerant pressure data and the temperature data may also be data acquired from other positions in the air-conditioning system 100. In this embodiment, the pressure sensor 71 and the temperature sensor 72 both establish a signal connection with the expansion valve control unit 62, and can transmit corresponding electric signals generated or converted by the pressure data and temperature data sensed by the pressure sensor 71 and the temperature sensor 72 to the expansion valve control unit 62, and the electronic expansion valve control unit 62 can process the respective electric signals, to recover the respective electric signals to corresponding pressure data and corresponding temperature data, and subsequently process and transmit these data. In other embodiments, the pressure sensor 71 and/or the temperature sensor 72 may also establish a signal connection with the main control unit 71.

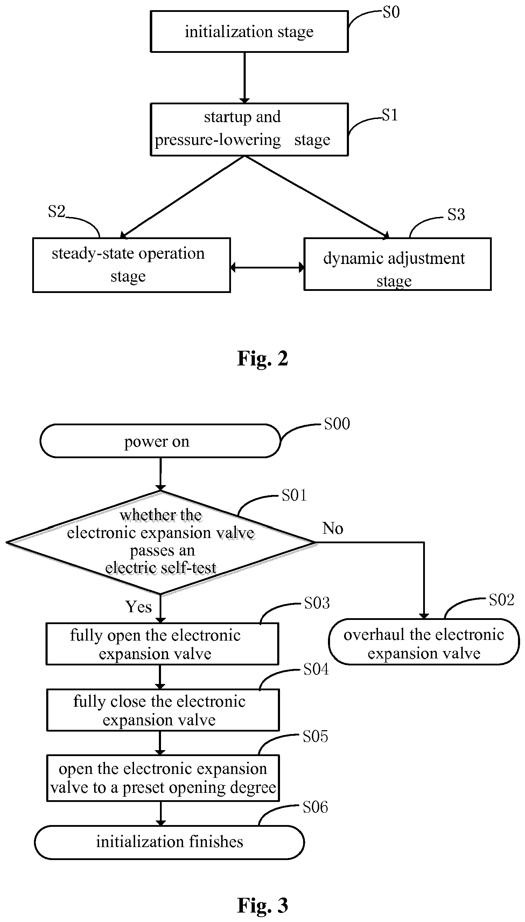

Referring to Figure 2, working stages of the air-conditioning system 100 mainly include an initialization stage S0, a startup and lowing temperature stage S1, a steady-state operation stage S2, and a dynamic adjustment stage S3. In practical operation, the air-conditioning system 100 performs these working stages according to a sequence as follows. First, the air-conditioning system 100 enters the initialization stage S0 to initialize the electronic expansion valve 3, and then enters the startup and lowing temperature stage S1 after the initialization finishes, and after the startup and lowing temperature stage S1, enters the steady-state operation stage S2 or the dynamic adjustment stage S3 according to the current specific working condition. In this embodiment, the steady-state operation stage S2 refers to a stage in which the compressor 1 of the air-conditioning system 100 has a relatively stable rotational speed, for example, when a vehicle where the air-conditioning system 100 is mounted is driven at a relatively stable speed. The dynamic adjustment stage S3 refers to a stage in which the rotational speed of the compressor 1 of the air-conditioning system 100 changes drastically, for example, when a speed of the vehicle where the air-conditioning system 100 is located changes significantly. The specific method for allowing the air-conditioning system 100 to enter the steady-state operation stage S2 or the dynamic adjustment stage S3 is that: the main control unit 61 monitors the rotational speed of the compressor 1 via the compressor control unit 63 while timing, and calculates a change rate of the rotational speed of the compressor 1 with respect to time (that is a rotational acceleration of the compressor 1), and controls the air-conditioning system 100 to enter the steady-state operation stage S2 or the dynamic adjustment stage S3 according to the calculation result. In the working process of the air-conditioning system 100, according to the specific working conditions of the air-conditioning system 100, the steady-state operation stage S2 and the dynamic adjustment stage S3 may be interconverted. The specific operating steps in these working stages according to this embodiment are described in conjunction with drawings.

Particularly, for allowing the following description to the specific operating steps to be more easily understood, two conceptions which will be mentioned hereinafter, namely "EXV fine adjustment" (namely the fine adjustment of the electronic expansion valve) and " EXV quick adjustment" (that is, the quick adjustment of the electronic expansion valve) are described here in advance.

Specifically, the "EXV fine adjustment" in the present application refers to that the main control unit 61 performs a PID fine adjustment, via the expansion valve control unit 62, to the opening of the electronic expansion valve 3, and the PID fine adjustment method refers to that the main control unit 61 calculates a target by the following formula I:

$$CTS = P \cdot e + \int I \cdot edt + D\frac{de}{dt}.$$

In this formula I, CTS is an opening of the electronic expansion valve, P represents a preset proportionality coefficient, I represents a preset integral coefficient, D represents a preset differential coefficient, e represents a difference value between the current refrigerant pressure at an inlet of the electronic expansion valve and a control target pressure value, and t represents time. The specific values of P, I, and D may be determined by conventional experimental calibration methods, and these methods are not described in detail hereinafter. And then, the main control unit adjusts the opening of the electronic expansion valve 3, by the expansion valve control unit 62, to a target fine adjustment opening calculated according to the above formula I. In normal conditions, target of opening according to the fine adjustment mode should be an opening allowing the pressure of the electronic expansion valve 3 to reach the control target pressure value.

The "EXV quick adjustment" in the present application refers to that the main control unit 61 performs a PID quick adjustment, via the expansion valve control unit 62, to the opening of the electronic expansion valve 3. The specific PID quick adjustment method is that: the main control unit 61 calculates the target of the opening by the following formula II:

$$CTS = aP \cdot e + b \int I \cdot edt + cD \frac{de}{dt}.$$

In the formula II, a is a preset proportionality amplification coefficient, b is a preset integral amplification coefficient, and c is a preset differential amplification coefficient. a, b and c are each a real number greater than 1, and in this embodiment, each of a, b and c preferably has a value ranging from 1.5 ~ 5, for example the value ranging from 1.5 to 2.5. According to experiments, this numerical value range may not only allow the opening of the electronic expansion valve 3 to be adjusted to the target as quickly as possible, but also may ensure the valve needle not to be out of control due to a too large adjustment speed. Then the main control unit 61 adjusts the opening of the electronic expansion valve 3 by the expansion valve control unit 62 to the target calculated according to the above formula II. In general conditions, the target of the opening should be an opening allowing the pressure of the electronic expansion valve 3 to be changed into the control target pressure value in the shortest time. It is easily understood according to the formula II that, operating of the PID quick adjustment is actually to amplify the parameters P, I and D in the above formula I by a certain multiple, thereby increasing a speed of the PID adjustment. By the PID quick adjustment, the opening of the electronic expansion valve 3 may be adjusted at a faster adjustment speed compared with the above PID fine adjustment, thereby adjusting the opening to the ideal value in a shorter time.

Referring to Figure 3, in this embodiment, the initialization stage S0 in the air-conditioning system 100 refers to an operating stage in which the electronic expansion valve 3 is initialized when the air-conditioning system 100 starts to operate. The initialization stage S0 includes the following operating steps S00 to S06.

In step S00, the air-conditioning system 100 is power-on, and is controlled to start to operate.

In step S01, the main control unit 61 controls the expansion valve control unit 62 to perform an electric self-test to the electronic expansion valve 3.

In step S02, if the electronic expansion valve 3 does not pass the electric self-test, the electronic expansion valve 3 is overhauled.

In step S03, if the electronic expansion valve 3 passes the electrical self-test, the electronic expansion valve 3 is controlled by the expansion valve control unit 62 to be fully opened.

In step S04, after being fully opened, the electronic expansion valve 3 is controlled to be fully closed by the expansion valve control unit 62.

In step S05, after being fully closed, the electronic expansion valve 3 is controlled by the expansion valve control unit 62 to be adjusted to a preset initial opening to ensure that a mechanical part of the electronic expansion valve 3 can realize required functions, and also to leave a certain opening margin for the electronic expansion valve 3 to prevent the electronic expansion valve 3 from being too slowly opened when the compressor starts and prevent the refrigerating pressure of the refrigerant from rising too fast to cause the air-conditioning system 100 to activate the high pressure protection measure in advance. In this embodiment, the preset initial opening is 20% to 50% of a maximum opening of the electronic expansion valve 3, and preferably may further be 25%; and in other embodiments, the preset initial opening may be adjusted according to specific types of products and practical working conditions.

In step S06, when the electronic expansion valve 3 is opened to the preset initial opening, the initialization stage is finished.

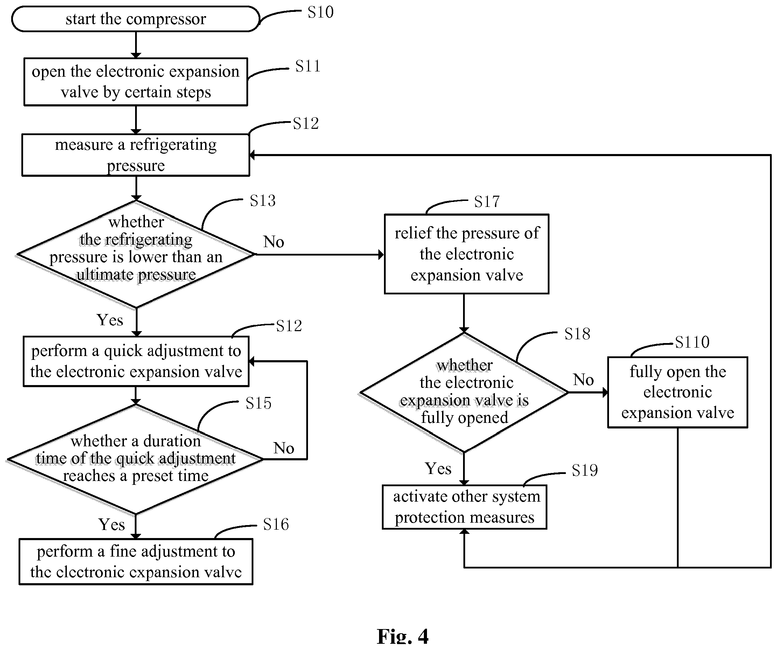

Referring to Figure 4, after the initialization stage S0 is finished, the air-conditioning system 100 enters the startup and lowing temperature stage S1, namely, a temperature in a specific area in the vehicle is reduced by circulation cooling of the refrigerant. The startup and lowing temperature stage S1 includes the following operation steps S10 to S19.

In step S10, the compressor of the air-conditioning system 100 is started.

In step S11, the electronic expansion valve 3 is opened in advance to a preset opening, and an object of this operation is to leave a certain opening margin for the electronic expansion valve 3, to prevent the electronic expansion valve 3 from being too slowly opened when the compressor 1 is started, and prevent the refrigerating pressure of the refrigerant from rising too fast to cause the air-conditioning system 100 to activate the high pressure protection measure in advance. In this embodiment, the preset opening to which the electronic expansion valve is opened in advance is calculated by the formula: $F*(RPM_n-RPM_{n-1})/(t_n-t_{n-1})$, where F represents a feedforward constant coefficient calibrated by experiment. In this embodiment, a range of F is preferably from 0.0125 to 0.075, and in other embodiments, the range of F may also be adjusted according to specific types of the air-conditioning system 100 and practical working conditions. $RPM_n$ represents a current rotational speed of the compressor 1 tested by the compressor control unit 63 at the current time and $t_n$ represents a current timekeeping moment at the currently latest time, $RPM_{n-1}$ represents a previous rotational speed of the compressor 1 tested by the compressor control unit 63 at the previous time and $t_{n-1}$ represents a previous timekeeping moment.

In step S12, in the working process of the air-conditioning system 100, the expansion valve control unit 62 transmits the pressure data of the refrigerant at the inlet or before the inlet of the electronic expansion valve 3 acquired by the pressure sensor 71 as refrigerating pressure data of the refrigerant to the main control unit 61.

In step S13, the main control unit 61 compares the current refrigerating pressure data of the refrigerant with the initial ultimate pressure range, to determine whether the current refrigerating pressure of the refrigerant is lower than an upper limit of the initial ultimate pressure range. If the determination result is that the current refrigerating pressure of the refrigerant is lower than the upper limit of the initial ultimate pressure range, the system enters step S14; and if the determination result is that the current refrigerating pressure of the refrigerant is not lower than the upper limit of the initial ultimate pressure range, the system enters step S17.

In step S14, if the determination result of step S13 is that the current refrigerating pressure of the refrigerant is lower than the upper limit of the initial ultimate pressure range, the opening of the electronic expansion valve 3 is adjusted according to the EXV quick adjustment method.

In step S15, a time duration for performing step S14 is timed to determine whether time for adjusting the opening of the electronic expansion valve 3 according to the EXV quick adjustment method in step 14 reaches a preset quick adjustment duration time. Entering step S16 if the determination result is that the time for adjusting the opening of the electronic expansion valve 3 according to the EXV quick adjustment method in step 14 reaches the preset quick adjustment duration time, and returning to step S14 if the determination result is that the time for adjusting the opening of the electronic expansion valve 3 according to the EXV quick adjustment method in step 14 does not reach the preset quick adjustment duration time.

In step S16, adjusting the opening of the electronic expansion valve 3 by the EXV quick adjustment method is stopped, and instead, the opening of the electronic expansion valve 3 is adjusted by the EXV fine adjustment method. In addition, after the step S16 is performed, the air-conditioning system 100 may be controlled to enter the subsequent steady-state operation stage S2 or dynamic adjustment stage S3 according to specific working conditions, and related operations are described in details hereinafter.

In step S17, if the determination result of step 13 is that the current refrigerating pressure of the refrigerant is not lower than the upper limit of the initial ultimate pressure range, an overpressure phenomenon of the refrigerant is indicated to be very serious, and the refrigerating pressure is difficult to be timely relieved only by adjusting the opening of the electronic expansion valve 3, thus the main control unit 61 controls the electronic expansion valve 3 by the expansion valve control unit 62 to relief the refrigerating pressure.

In step S18, after step S17 is performed, the main control unit 61 determines, by the expansion valve control unit 62, whether the electronic expansion valve 3 is currently in a fully opened state. If the determination result is that the electronic expansion valve 3 is currently in the fully opened state, the system enters step S19; and if the determination result is that of the electronic expansion valve 3 is currently not in the fully opened state, the system enters step S110.

In step S19, if the determination result of step S18 is that the electronic expansion valve 3 is currently in the fully opened state, the overpressure phenomenon of the refrigerant is indicated to be very serious, and even the electronic expansion valve 3 is fully opened, the refrigerating pressure cannot be timely released, and other pressure lowering measures may be further required to be taken. At this time, the main control unit 61 issues an emergency control instruction to the compressor control unit 63 to command the compressor control unit 63 to control the compressor 1 to take a high pressure protection measure to promptly reduce the pressure of the refrigerant and protect the air-conditioning system 100. The high pressure protection measure taken by the compressor control unit 63 may include controlling the compressor 1 to directly stop operating, or controlling the compressor 1 to reduce a displacement of the refrigerant, etc..

In step S110, if the determination result of step S18 is that of the electronic expansion valve 3 is currently not in the fully opened state, the main control unit 61 controls, by the electronic expansion valve 62, the electronic expansion valve 3 to be fully opened, to allow the refrigerant to pass through the electronic expansion valve 3 at the largest flow rate, thus reducing the refrigerating pressure of the refrigerant to the greatest extent via the electronic expansion valve 3. It should be understood that, according to specific requirements, after step S110, the system may also choose to continue to perform the above step S19 or return to the above step S12.

Reference is made to Figures 2, 5 and 6. When the startup and lowing temperature stage S1 is finished, the main control unit 61 may monitor the rotational speed of the compressor 1 by the compressor control unit 63 while performs timekeeping, to calculate a change rate of the rotational speed of the compressor 1 with respect to time, and control the air-conditioning system 100, according to the calculation result, to choose entering the steady-state operation stage S2 or the dynamic adjustment stage S3. For example, the main control unit 61 may determine that the vehicle where the air-conditioning system 100 is located is in an idle speed or a steady high speed running state at this moment when the change rate of the rotational speed of the compressor 1 with respect to time does not reach a preset threshold value, and controls the air-conditioning system 100 to enter the steady operation stage S2. And the main control unit 61 may determine that the vehicle where the air-conditioning system 100 is located is in a driving state with a speed frequently changing, for example, the vehicle runs in the city, when the change rate of the rotational speed of the compressor 1 with respect to time reaches or exceeds the preset threshold value, and controls the air-conditioning system 100 to enter the dynamic adjustment stage S3. In addition, in the case that the above calculation result changes, the main control unit 61 may also control the air-conditioning system 100, according to the specific change conditions, to enter the dynamic adjustment stage S3 from the steady-state operation stage S2, or enter the steady-state operation stage S2 from the dynamic adjustment stage S3 at any time.

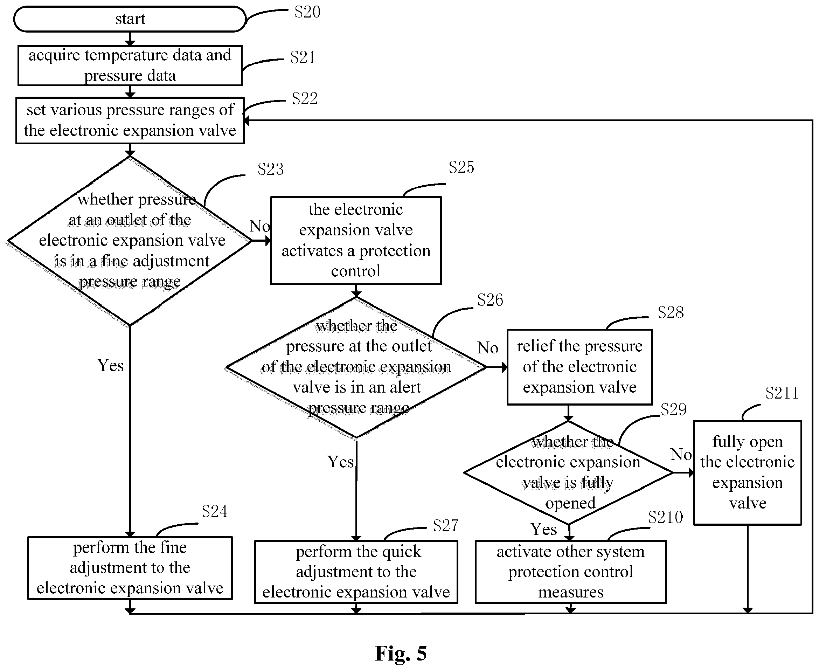

Referring to Figure 5, the steady-state operation stage S2 includes the following operating steps S20 to S211.

In step S20, the air-conditioning system 100 starts to enter the steady-state operation stage S2.

In step S21, after entering the steady-state operation stage S2, the expansion valve control unit 62 transmits the pressure data of the refrigerant at the inlet or before the inlet of the electronic expansion valve 3 acquired by the pressure sensor 71 as refrigerating pressure data of the refrigerant to the main control unit 61, and continues to transmit the temperature data at the air inlet of the heating device 2 acquired by the temperature sensor 72 to the main control unit 61.

In step S22, the main control unit 61 resets the control target pressure value, the fine adjustment pressure range, the alert pressure range and the ultimate pressure range of the electronic expansion valve 3 according to the temperature data received; and on the premise that the temperature at the air inlet of the heating device 2 of the air-conditioning system 100 is consistent with the temperature data received, the control target pressure value that is reset should enable the air-conditioning system 100 to have the highest coefficient of performance (abbreviated as COP). Specific method for setting the control target pressure value may refer to a conventional experimental calibration method in the field.

In step S23, after resetting the control target pressure value of the electronic expansion valve 3, the main control unit 61 compares the current refrigerating pressure data of the refrigerant with the fine adjustment pressure range reset, to determine whether the current refrigerating pressure data of the refrigerant is within the fine adjustment pressure range. It is to be noted that, in this embodiment, the step of determining whether the refrigerating pressure of the refrigerant is in the fine adjustment pressure range refers to determining whether the refrigerating pressure of the refrigerant is higher than an upper limit of the fine adjustment pressure range, and whether the refrigerating pressure of the refrigerant is lower than a lower limit of the fine adjustment pressure range is left out of account. If the determination result is that the current refrigerating pressure data of the refrigerant is within the fine adjustment pressure range, the system enters step S24; and if the determination result is that the current refrigerating pressure data of the refrigerant is not within the fine adjustment pressure range, the system enters step S25.

In step S24, if the determination result of step S23 is that the current refrigerating pressure data of the refrigerant is within the fine adjustment pressure range, the opening of the electronic expansion valve 3 is adjusted according to the above EXV fine adjustment method.

In step S25, if the determination result of step S23 is that the current refrigerating pressure data of the refrigerant is not within the fine adjustment pressure range, the main control unit 61 controls the electronic expansion valve 3 by the expansion valve control unit 62 to activate a protection control. The specific measure of the protection control includes the following steps S26 to S211.

In step S26, the main control unit 61 compares the current refrigerating pressure data of the refrigerant with the alert pressure range reset, to determine whether the current refrigerating pressure data of the refrigerant is within the alert pressure range. It is to be noted that, in this embodiment, the step of determining whether the refrigerating pressure of the refrigerant is within the alert pressure range refers to determining whether the refrigerating pressure of the refrigerant is higher than an upper limit of the alert pressure range, and whether the refrigerating pressure of the refrigerant is lower than a lower limit of the alert pressure range is left out of account. If the determination result is that the current refrigerating pressure data of the refrigerant is within the alert pressure range, the system enters step S27; and if the determination result is that the current refrigerating pressure data of the refrigerant is not within the alert pressure range, the system enters step S28.

In step S27, if the determination result of step S26 is that the current refrigerating pressure data of the refrigerant is within the alert pressure range, the opening of the electronic expansion valve 3 is adjusted according to the above EXV quick adjustment method.

In step S28: if the determination result of step S26 is that the current refrigerating pressure of the refrigerant is not within the alert pressure range, the overpressure phenomenon of the refrigerant is indicated to be very serious, and the pressure is difficult to be timely relieved only by adjusting the opening of the electronic expansion valve 3, thus the main control unit 61 controls the electronic expansion valve 3 via the expansion valve control unit 62 to relief pressure.

In step S29, after step S28 is performed, the main control unit 61 determines whether the electronic expansion valve 3 is currently in the fully opened state by the expansion valve control unit 62. If the determination result is that the electronic expansion valve 3 is currently in the fully opened state, the system enters step S210; and if the determination result is that the valve needle of the electronic expansion valve 3 is currently not in the fully opened state, the system enters step S211.

In step S210, if the determination result of step S29 is that the electronic expansion valve 3 is currently in the fully opened state, the overpressure phenomenon of the refrigerant is indicated to be very serious, and even the electronic expansion valve 3 is fully opened, the pressure cannot be released timely, and other pressure lowering measures are required to taken. At this time, the main control unit 61 issues an emergency control instruction to the compressor control unit 63, and commands the compressor control unit 63 to control the compressor 1 to take a high pressure protection measure to promptly reduce the pressure of the refrigerant and protect the air-conditioning system 100. The high pressure protection measure taken by the compressor control unit 63 may include controlling the compressor 1 to directly stop operating, or controlling the compressor 1 to reduce the displacement of the refrigerant, etc..

In step S211, if the determination result of step S29 is that the electronic expansion valve 3 is currently not in the fully opened state, the main control unit 61 controls the electronic expansion valve 3 by the electronic expansion valve 62 to be fully opened, to allow the refrigerant to pass through the electronic expansion valve 3 by the largest flow rate, so as to reduce the refrigerating pressure of the refrigerant to the largest extent by using the electronic expansion valve 3. It may be understood that, according to specific requirements, after step S211, the system may also choose to continue to perform the above step S210; and after steps S24, S27, S210, and S211, the system may choose to return to step S21.

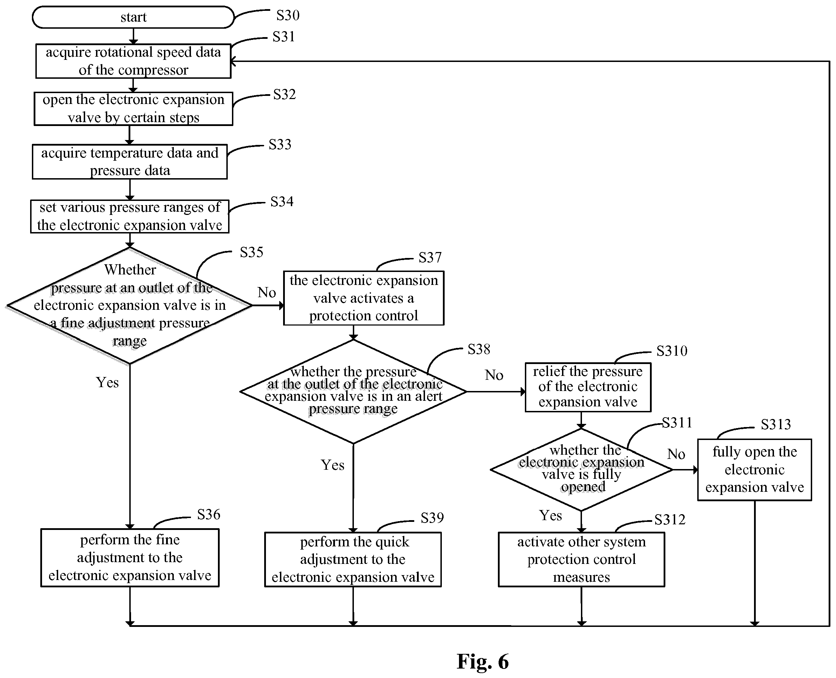

Referring to Figure 6, the dynamic adjustment stage S3 includes various operation steps S30 to S313 as follows.

In step S30, the air-conditioning system 100 starts to enter the dynamic adjustment stage S3.

In step S31, in the operating process of the air-conditioning system 100, the compressor control unit 63, while controlling the rotation of the compressor 1, transmits the data of the rotational speed of the compressor 1 controlled by the compressor control unit 63 to the main control unit 61, to enable the main control unit 61 to monitor a change of the rotational speed of the compressor 1.

In step S32, the main control unit 61 opens the electronic expansion valve 3 in advance to a predetermined opening by the expansion valve control unit 62. An object of this operation is to leave a certain opening margin for the electronic expansion valve 3, to prevent the electronic expansion valve 3 from being too slowly opened when the compressor 1 is started, and prevent the refrigerating pressure of the refrigerant from rising too fast to cause the air-conditioning system 100 to activate the high pressure protection measure in advance. In this embodiment, the preset opening to which the electronic expansion valve is opened in advance is calculated by the formula: $F*(RPM_n-RPM_{n-1})/(t_n-t_{n-1})$, where F is a feedforward constant coefficient calibrated by experiment. In this embodiment, the range of F is preferably from 0.0125 to 0.075, and in other embodiments, the range of F may also be adjusted according to specific types of the air-conditioning system 100 and practical working conditions. $RPM_n$ represents a current rotational speed of the compressor 1 tested by the compressor control unit 63 at a currently latest time and $t_n$ represents a current timing moment at the currently latest time, and $RPM_{n-1}$ represents a previous rotational speed of the compressor 1 at a previous time and $t_{n-1}$ represents a previous timing moment.

In step S33, in the working process of the air-conditioning system 100, the expansion valve control unit 62 transmits the pressure data of the refrigerant at the inlet or before the inlet of the electronic expansion valve 3 acquired by the pressure sensor 71 as refrigerating pressure data of the refrigerant to the main control unit 61, and transmits the temperature data at the air inlet of the heating device 2 acquired by the temperature sensor 72 to the main control unit 61.

In step S34, the main control unit 61 resets the control target pressure value, the fine adjustment pressure range, the alert pressure range and the ultimate pressure range of the electronic expansion valve 3 according to the temperature data received; and on the premise that the temperature at the air inlet of the heating device 2 of the air-conditioning system 100 is consistent with the temperature data received, the reset control target pressure value may enable the air-conditioning system 100 to have the highest coefficient of performance (abbreviated as COP). Specific method for setting the control target pressure value may be calibrated by referring to a conventional experiment in the field, which is not described hereinafter.

In step S35, after resetting the control target pressure value of the electronic expansion valve 3, the main control unit 61 compares the current refrigerating pressure data of the refrigerant with the reset fine adjustment pressure range, to determine whether the current refrigerating pressure data of the refrigerant is within the fine adjustment pressure range. It is to be noted that, in this embodiment, "determining whether the refrigerating pressure of the refrigerant is within the fine adjustment pressure range" means determining whether the refrigerating pressure of the refrigerant is higher than an upper limit of the fine adjustment pressure range, and whether the refrigerating pressure of the refrigerant is lower than a lower limit of the fine adjustment pressure range is not taken into consideration. If the determination result is that the current refrigerating pressure data of the refrigerant is within the fine adjustment pressure range, the system enters step S36; and if the determination result is that the current refrigerating pressure data of the refrigerant is not within the fine adjustment pressure range, the system enters step S37.

In step S36, if the determination result of step S35 is that the current refrigerating pressure data of the refrigerant is within the fine adjustment pressure range, the opening of the electronic expansion valve 3 is adjusted according to the above EXV fine adjustment method.

In step S37, if the determination result of step S35 is that the current refrigerating pressure data of the refrigerant is not within the fine adjustment pressure range, the main control unit 61 controls the electronic expansion valve 3 by the expansion valve control unit 62 to activate a protection control. The specific measure of the protection control includes various steps as follows.

In step S38, the main control unit 61 compares the current refrigerating pressure data of the refrigerant with the reset alert pressure range, to determine whether the current refrigerating pressure data of the refrigerant is within the alert pressure range. It is to be noted that, in this embodiment, "determining whether the refrigerating pressure of the refrigerant is within the alert pressure range" means determining whether the refrigerating pressure of the refrigerant is higher than an upper limit of the alert pressure range, and whether the refrigerating pressure of the refrigerant is lower than a lower limit of the alert pressure range is not taken into consideration. If the determination result is that the current refrigerating pressure data of the refrigerant is within the alert pressure range, the system enters step S39; and if the determination result is that the current refrigerating pressure data of the refrigerant is not within the alert pressure range, the system enters step S40.

In step S39, if the determination result of step S38 is that the current refrigerating pressure data of the refrigerant is within the alert pressure range, the opening of the electronic expansion valve 3 is adjusted according to the above EXV quick adjustment method.

In step S310, if the determination result of step S38 is that the current refrigerating pressure data of the refrigerant is not within the alert pressure range, the overpressure phenomenon of the refrigerant is indicated to be very serious, and the pressure is difficult to be timely relieved only by adjusting the opening of the electronic expansion valve 3, thus the main control unit 61 controls the electronic expansion valve 3, by the expansion valve control unit 62, to relief pressure.

In step S311, after the step S310 is performed, the main control unit 61 determines whether the electronic expansion valve 3 is currently in a fully opened state via the expansion valve control unit 62. If the determination result is that the electronic expansion valve 3 is currently in the fully opened state, the system enters step S312; and if the determination result is that the electronic expansion valve 3 is currently not in the fully opened state, the system enters step S313.

In step S312: if the determination result of step S311 is that the electronic expansion valve 3 is currently in the fully opened state, the overpressure phenomenon of the refrigerant is indicated to be very serious, and even the electronic expansion valve 3 is fully opened, the pressure cannot be timely released, and other pressure lowering measures are required to be further taken. At this time, the main control unit 61 issues an emergency control instruction to the compressor control unit 63, and commands the compressor control unit 63 to control the compressor 1 to take a high pressure protection measure to promptly reduce the pressure of the refrigerant and protect the air-conditioning system 100. The high pressure protection measure taken by the compressor control unit 63 may include controlling the compressor 1 to directly stop operating, or controlling the compressor 1 to reduce the displacement of the refrigerant, etc..

In step S313, if the determination result of step S311 is that the electronic expansion valve 3 is currently not in the fully opened state, the main control unit 61 controls the electronic expansion valve 3, by the electronic expansion valve 62, to be fully opened, to allow the refrigerant to pass through the electronic expansion valve 3 at the largest flow rate, thereby reducing the refrigerating pressure of the refrigerant to the largest extent by using the electronic expansion valve 3. It should be understood that, according to specific requirements, after step S313, the system may also choose to continue to perform the above step S312; and after each of steps S36, S39, S312, S313, the system may choose to return to step S31.

It should be understood that, according to the control method for the air-conditioning system provided by the present application (such as the above embodiments), in different operation stages of the air-conditioning system, the system may take different depressurization measures respectively when the pressure of the electronic expansion valve is within different ranges to timely lower the pressure, which can reduce the number of times of the air-conditioning system being forced to activate the high pressure protection function and even the physical pressure relief function as far as possible, and facilitates the maintenance of the working performance of the air-conditioning system, and prolongs a service life thereof.

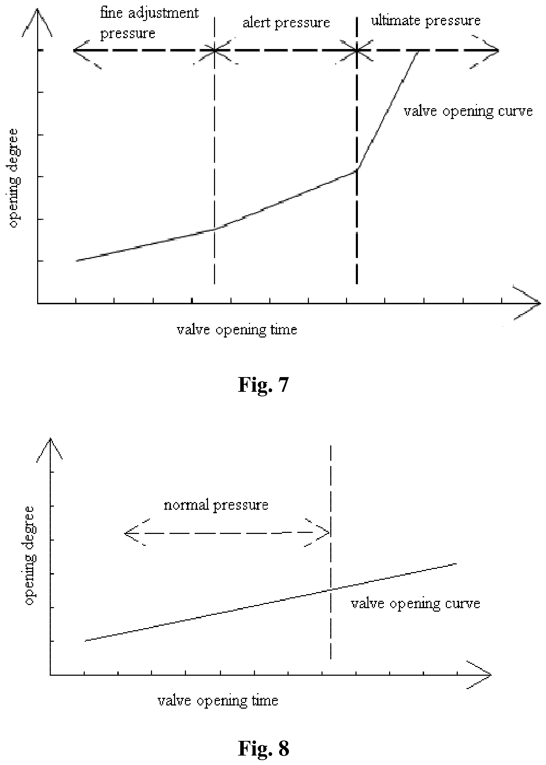

Reference is made to Figures 7 and 8, Figure 7 is a schematic view showing the relationship between an opening of an electronic expansion valve and time in the case that the control method for the air-conditioning system according to the above embodiments of the present application is applied to control an electronic expansion valve (for example the above electronic expansion valve 3); and Figure 8 is a schematic view showing the relationship between the opening of the electronic expansion valve and time in the case that the conventional control method for the air-conditioning system is used to control the electronic expansion valve. As can be clearly seen from Figures 7 and 8, according to the method provided by this embodiment, a first adjustment method such as the above PID adjustment method may be adopted to gradually increase the opening of the electronic expansion valve when the pressure of the electronic expansion valve is within the preset fine adjustment pressure range. A second adjustment method which can adjust the opening of the electronic expansion valve more quickly compared with the first adjustment method, for example the PID adjustment method with amplified coefficient, may be adopted to increase the opening of the electronic expansion valve at a faster speed when the pressure of the electronic expansion valve is within the alert pressure range. And the PID adjustment method is abandoned when the pressure of the electronic expansion valve is within the ultimate pressure range, and an emergency depressurization measure is taken to increase the opening of the electronic expansion valve to the largest as quickly as possible. Only when all of the above means cannot reduce the pressure of the electronic expansion valve to the fine adjustment pressure range, the high pressure protection function of the compressor can be activated. In this way, the number of times of the air-conditioning system being forced to activate the high pressure protection function and even activate the physical pressure relief function can be decreased. Particularly, changing a speed for opening a valve port of the electronic expansion valve may only increase action steps of the valve needle to a small extent, which belongs to the range of normal operation, and may not adversely affect the service life of the electronic expansion valve.

In the conventional control method for the air-conditioning system as shown in Figure 8, whatever a pressure range the pressure of the electronic expansion valve is within, the opening of the electronic expansion valve can only be adjusted by the same PID adjustment method, that is to say, the speed for opening the valve port of the electronic expansion valve is always constant. In this way, in the case that the pressure of the electronic expansion valve exceeds the upper limit of the fine adjustment pressure range, the pressure may not be timely decreased by the PID adjustment method. Moreover, according to the conventional method, when the conventional PID adjustment means fails, the system may not take the PID quick adjustment and the pressure lowering measure of allowing the electronic expansion valve to be fully opened, instead, the high pressure protection function of the compressor is directly activated. In this way, the high pressure protection function of the compressor is apt to be frequently activated by the system, and even the physical pressure relief function is further required to be activated, which may cause significant losses to the system. Obviously, compared with the conventional method of always adopting the same PID adjustment method to adjust the opening of the electronic expansion valve, the method according to the present application facilitates maintaining the operating performance of the air-conditioning system, prolongs the service life thereof, and can securely, effectively, and quickly adjust the refrigerating pressure of the air-conditioning system.

**Claims**

1. A control method for an air-conditioning system, wherein the air-conditioning system (100) comprises a compressor (1), a cooling device (4), a heating device (2), an electronic expansion valve (3), and a control assembly (6), the control assembly (6) is electrically connected to the compressor (1), the control assembly (6) is electrically connected to the electronic expansion valve (3), and the control assembly (6) of the air-conditioning system (100) adjusts an opening of the electronic expansion valve (3), the control method comprises:

acquiring refrigerant pressure data and air temperature data at a predetermined position in the air conditioning system (100) from predetermined positions of the air-conditioning system (100), and the control assembly (6) receiving electric signals of the refrigerant pressure data and the air temperature data acquired, or electric signals, converted from the refrigerant pressure data and the air temperature data acquired;
acquiring, by the control assembly (6), a fine adjustment pressure range and an alert pressure range of the electronic expansion valve (3) according to the electric signal related to the air temperature data received by the control assembly (6), an upper limit of the fine adjustment pressure range is lower or equal to a lower limit of the alert pressure range;
determining, by the control assembly (6), whether the current refrigerant pressure data is within the fine adjustment pressure range, adjusting an opening of the electronic expansion valve (3) according to a first adjustment method preset by the control assembly (6), if the determination result is that the current refrigerant pressure is within the fine adjustment pressure range;
determining, by the control assembly (6), whether the current refrigerant pressure data is within the alert pressure range, adjusting the opening of the electronic expansion valve (3) according to a second adjustment method preset by the control assembly (6), if the determination result is that the current refrigerant pressure is within the alert pressure range;
wherein a speed for adjusting the opening of the electronic expansion valve (3) according to the second adjustment method is greater than a speed for adjusting the opening of the electronic expansion valve (3) according to the first adjustment method;
controlling the electronic expansion valve (3) to relief pressure, if the determination result is that the current refrigerant pressure exceeds an upper limit of the alert pressure range.

2. The control method according to claim 1, wherein determining whether the current refrigerant pressure is within the alert pressure range, if the determination result is that the current refrigerant pressure exceeds an upper limit of the fine adjustment pressure range; or determining whether the current refrigerant pressure is within the fine adjustment pressure range, if the determination result is that the current refrigerant pressure exceed the lower limit of the alert pressure range.

**3.** The control method according to claim 1 or 2, wherein acquiring, by the control assembly (6), a preset ultimate pressure which is higher than an upper limit of the alert pressure range;

determining, by the control assembly (6), whether the current refrigerant pressure is higher than a preset ultimate pressure, which is bigger than an upper limit of the alert pressure range;

determining whether the current refrigerant pressure is within the alert pressure range, if the current refrigerant pressure is lower than the preset ultimate pressure;

and determining whether the current refrigerant pressure is within the fine adjustment pressure range, if the current refrigerant pressure is lower than the lower limit of the alert pressure range.

**4.** The control method according to any one of claims 1 to 3, wherein before the step of acquiring refrigerant pressure data and air temperature data at a predetermined position in the air conditioning system (100) respectively from predetermined positions of the air-conditioning system (100), and transmitting electric signals of the refrigerant pressure data and the air temperature data acquired, or electric signals converted from the refrigerant pressure data and the air temperature data acquired to the control assembly (6), the control method further comprises:

timing by the control assembly (6), or, providing a timer in the air-conditioning system (100) and timing by the timer;

obtaining a change rate of a rotational speed of the compressor (1) with respect to time according to the rotational speed of the compressor (1), and determining whether the change rate is lower than a preset rate threshold value;

controlling the air-conditioning system (100) to enter a steady-state operation stage (S2) if the determination result is that the change rate is lower than the preset rate threshold value; and controlling the air-conditioning system (100) to enter a dynamic adjustment stage (S3), and obtaining, by the control assembly (6) according to the rotational speed of the compressor (1) or the rotational speed of the compressor (1) and a built-in program, a target of the opening which the electronic expansion valve (3) is required to be adjusted, and controlling, by the control assembly (6), the electronic expansion valve (3) to be adjusted to the target, or sending, by the control assembly (6), a control signal to control the electronic expansion valve (3) to be adjusted to the obtained target if the determination result is that the change rate is not lower than the preset rate threshold value.

**5.** The control method according to any one of claims 1 to 4, wherein the control method further comprises: determining, by the control assembly (6) after the step of controlling the electronic expansion valve (3) to relief pressure, whether the electronic expansion valve (3) is in a fully opened state; controlling the electronic expansion valve (3) to reach the fully opened state, if the determination result is that the electronic expansion valve (3) is not in the fully opened state.

**6.** The control method according to claim 5, wherein controlling the compressor (1) to take an emergency protection measure if the determination result is that the electronic expansion valve (3) is in the fully opened state; the emergency protection measure comprises controlling the compressor (1) to stop operating or reduce displacement by the control assembly (6).

**7.** The control method according to any one of claims 1 to 6, wherein the first adjustment method comprises:

obtaining, by the control assembly (6), a target of the electronic expansion valve (3) by the formula:

$$CTS = P \cdot e + \int I \cdot edt + D\frac{de}{dt}$$

where CTS represents the target of the electronic expansion valve (3) to be adjusted, P represents a preset proportionality coefficient, I represents an integral coefficient, D represents a preset differential coefficient, e represents a difference value between a current refrigerant pressure of the electronic expansion valve (3) and the control target pressure, and t represents time; and

controlling, by the control assembly (6), the opening of the electronic expansion valve (3) to be adjusted into the target .

**8.** The control method according to any one of claims 1 to 7, wherein the second adjustment method comprises:

obtaining, by the control assembly (6), a target of the electronic expansion valve (3) through the formula:

$$CTS = aP \cdot e + b\int I \cdot edt + cD\frac{de}{dt}$$

where CTS represents the target of the electronic expansion valve (3) to be adjusted, P represents a proportionality coefficient, I represents an integral coefficient, D represents a differential coefficient, e represents a difference value between the current refrigerant pressure of the electronic expansion valve (3) and the control target pressure, and t represents time; and a represents a proportionality amplification coefficient, b represents is an integral amplification coefficient, and c represents a differential amplification coefficient, each of a, b, and c ranges from $1.5 \sim 5$; and

controlling, by the control assembly (6), the opening of the electronic expansion valve (3) to be adjusted into the target .

9. The control method according to any one of claims 2 to 8, wherein before the step of obtaining a change rate of the rotational speed of the compressor (1) with respect to time according to the rotational speed of the compressor (1), and determining whether the change rate is lower than the preset rate threshold value, the control method further comprises a step of initializing (S0) the electronic expansion valve (3), and the step of initializing the electronic expansion valve (3) comprises:

energizing (S00) the air-conditioning system (100);
performing (S01) an electric self-test to the electronic expansion valve (3) through the control assembly (6); and overhauling (S02) the electronic expansion valve (3) if the electronic expansion valve (3) do not pass the electric self-test; and controlling (S03) the electronic expansion valve (3), by the control assembly (6), to be fully opened if the electronic expansion valve (3) passes the electric self-test, and controlling (S04) the electronic expansion valve (3), to be fully closed after the electronic expansion valve (3) is fully opened; and
controlling (S05) the electronic expansion valve (3), by the expansion valve control unit after the electronic expansion valve (3) is fully closed, to be adjusted to a preset initial opening, and the preset initial opening is 20% to 50% of a maximum opening of the electronic expansion valve (3).

10. The control method according to any one of claims 4 to 9, wherein before the step of obtaining the change rate of the rotational speed of the compressor (1) with respect to time according to the rotational speed of the compressor (1), and determining whether the change rate is lower than the preset rate threshold value, the control method further comprises a step of controlling the air-conditioning system (100) to enter a startup and lowing temperature stage (S1) by the control assembly (6), and the step of controlling the air-conditioning system (100) to enter the startup and lowing temperature stage (S1) by the control assembly (6) comprises:

starting (S10) the compressor (1);
opening (S11) the electronic expansion valve (3) in advance to a preset opening;
acquiring a pressure data of the refrigerant at an inlet of the electronic expansion valve (3) or before the inlet of the electronic expansion valve (3), and transmitting (S12) an electric signal of the pressure data acquired or an electric signal converted by the pressure data acquired to the control assembly (6);
determining (S13), by the control assembly (6), whether the current refrigerant pressure is lower than the preset ultimate pressure higher than an upper limit of the alert pressure range; and then adjusting (S14) the opening of the electronic expansion valve (3) according to a preset quick adjustment method if the determination result is that the current refrigerant pressure is lower than the preset ultimate pressure; and controlling (S17) the electronic expansion valve (3) to relief the pressure if the determination result is that the current refrigerant pressure is not lower than the upper limit of the preset ultimate pressure; and
determining (S18), by the control assembly (6) after controlling the electronic expansion valve (3) to relief the pressure, whether the electronic expansion valve (3) is currently in a fully opened state; and controlling (S19) the compressor (1) to take a high pressure protection measure if the determination result is that the electronic expansion valve (3) is in the fully opened state; and controlling (S110) the electronic expansion valve (3) to be in the fully opened state if the determination result is that the electronic expansion valve (3) is not in the fully opened state.

11. The control method according to claim 10, wherein in the startup and lowing temperature stage (S1) and the dynamic adjustment stage (S3), the value of the preset opening to which the electronic expansion valve (3) is opened in advance is calculated by the formula: $F*(RPM_n-RPM_{n-1})/(t_n-t_{n-1})$, with a unit being steps by which the electronic expansion valve (3) moves; where F represents a feedforward constant coefficient, and a range of F is from 0.0125 to 0.075; RPMn represents a current rotational speed of the compressor (1) tested and $t_n$ represents a current timing moment, and $RPM_{n-1}$ represents a previous rotational speed of the compressor (1) and $t_{n-1}$ represents a previous timing moment.

12. The control method according to any one of claims 1 to 11, wherein the air-conditioning system (100) is a vehicle air-conditioning system taken carbon dioxide as refrigerant, in the air-conditioning system (100) using an evaporator to be the cooling device (4), and using a gas cooler to be the heating device (2).

**Patentansprüche**

1. Steuerverfahren für eine Klimaanlage, wobei die Klimaanlage (100) einen Kompressor (1), eine Kühlvorrichtung (4), eine Heizvorrichtung (2), ein elektronisches Expansionsventil (3) und eine Steueranordnung (6) umfasst, die Steueranordnung (6) elektrisch mit dem Kompressor (1) verbunden ist, die Steueranordnung (6) elektrisch mit dem elektronischen Expansionsventil (3) verbunden ist und die Steueranordnung (6) der Klimaanlage (100) eine Öffnung des elektronischen Expansionsventils (3) einstellt, das Steuerverfahren umfassend:

Erfassen von Kältemitteldruckdaten und Lufttemperaturdaten an einer vorbestimmten Position in der Klimaanlage (100) von vorbestimmten Positionen der Klimaanlage (100), und wobei die Steueranordnung (6) elektrische Signale der erfassten Kältemitteldruckdaten und der Lufttemperaturdaten oder elektrische Signale, die aus den erfassten Kältemitteldruckdaten und den Lufttemperaturdaten umgewandelt wurden, empfängt;
Erfassen, durch die Steueranordnung (6), eines Feineinstelldruckbereichs und eines Warndruckbereichs des elektronischen Expansionsventils (3) gemäß dem elektrischen Signal, das mit den von der Steueranordnung (6) empfangenen Lufttemperaturdaten in Beziehung steht, wobei eine Obergrenze des Feineinstelldruckbereichs kleiner als oder gleich wie eine Untergrenze des Warndruckbereichs ist;
Bestimmen, durch die Steueranordnung (6), ob die aktuellen Kältemitteldruckdaten innerhalb des Feineinstellungsdruckbereichs sind, Einstellen einer Öffnung des elektronischen Expansionsventils (3) gemäß einem ersten Einstellverfahren, das durch die Steueranordnung (6) voreingestellt ist, wenn das Bestimmungsresultat ist, dass der aktuelle Kältemitteldruck innerhalb des Feineinstellungsdruckbereichs ist;
Bestimmen, durch die Steueranordnung (6), ob die aktuellen Kältemitteldruckdaten innerhalb des Alarmdruckbereichs sind, Einstellen der Öffnung des elektronischen Expansionsventils (3) gemäß einem zweiten Einstellverfahren, das durch die Steueranordnung (6) voreingestellt ist, wenn das Bestimmungsresultat ist, dass der aktuelle Kältemitteldruck innerhalb des Alarmdruckbereichs ist;
wobei eine Geschwindigkeit zum Einstellen der Öffnung des elektronischen Expansionsventils (3) gemäß dem zweiten Einstellverfahren größer ist als eine Geschwindigkeit zum Einstellen der Öffnung des elektronischen Expansionsventils (3) gemäß dem ersten Einstellverfahren;
Steuern des elektronischen Expansionsventils (3), um Druck zu entlasten, wenn das Bestimmungsresultat ist, dass der aktuelle Kältemitteldruck eine Obergrenze des Alarmdruckbereichs überschreitet.

2. Steuerverfahren nach Anspruch 1, wobei bestimmt wird, ob der aktuelle Kältemitteldruck innerhalb des Alarmdruckbereichs ist, wenn das Bestimmungsresultat ist, dass der aktuelle Kältemitteldruck eine Obergrenze des Feineinstelldruckbereichs überschreitet;
oder bestimmt wird, ob der aktuelle Kältemitteldruck innerhalb des Feineinstelldruckbereichs ist, wenn das Bestimmungsresultat ist, dass der aktuelle Kältemitteldruck die Untergrenze des Alarmdruckbereichs überschreitet.

3. Steuerverfahren nach Anspruch 1 oder 2, wobei die Steueranordnung (6) einen voreingestellten Enddruck erfasst, der höher ist als eine Obergrenze des Alarmdruckbereichs ;

Bestimmen, durch die Steueranordnung (6), ob der aktuelle Kältemitteldruck höher ist als ein voreingestellter Enddruck, der größer ist als eine Obergrenze des Alarmdruckbereichs ;
Bestimmen, ob der aktuelle Kältemitteldruck innerhalb des Alarmdruckbereichs ist, wenn der aktuelle Kältemitteldruck niedriger ist als der voreingestellte Enddruck; und Bestimmen, ob der aktuelle Kältemitteldruck innerhalb des Feineinstelldruckbereichs ist, wenn der aktuelle Kältemitteldruck niedriger ist als die Untergrenze des Alarmdruckbereichs.

4. Steuerverfahren nach einem der Ansprüche 1 bis 3, wobei vor dem Schritt eines Erfassens von Kältemitteldruckdaten und Lufttemperaturdaten an einer vorbestimmten Position in der Klimaanlage (100) bzw. von vorbestimmten Positionen der Klimaanlage (100) und eines Übertragens von elektrischen Signalen der erfassten Kältemitteldruckdaten und der Lufttemperaturdaten oder von elektrischen Signalen, die aus den erfassten Kältemitteldruckdaten und den Lufttemperaturdaten umgewandelt wurden, an die Steueranordnung (6), das Steuerverfahren ferner Folgendes umfasst:

Zeitsteuern durch die Steueranordnung (6), oder Bereitstellen einer Zeitschaltuhr in der Klimaanlage (100) und Zeitsteuern durch die Zeitschaltuhr;

Erlangen einer Änderungsrate einer Drehzahl des Kompressors (1) in Bezug auf die Zeit gemäß der Drehzahl des Kompressors (1) und bestimmen, ob die Änderungsrate niedriger ist als ein voreingestellter Ratenschwellenwert;

Steuern der Klimaanlage (100), um in eine stationäre Betriebsphase (S2) einzutreten, wenn das Bestimmungsresultat ist, dass die Änderungsrate niedriger ist als der voreingestellte Ratenschwellenwert; und

Steuern der Klimaanlage (100), um in eine dynamische Einstellphase (S3) einzutreten, und Erlangen einer Vorgabe für die Öffnung, auf die das elektronische Expansionsventil (3) eingestellt werden soll, durch die Steueranordnung (6) abhängig von der Drehzahl des Kompressors (1) oder der Drehzahl des Kompressors (1) und einem integrierten Programm, und Steuern des elektronischen Expansionsventils (3) durch die Steueranordnung (6), um es auf die Vorgabe einzustellen, oder Senden eines Steuersignals durch die Steueranordnung (6), um das elektronische Expansionsventil (3) zu steuern, um es auf die erlangte Vorgabe einzustellen, wenn das Bestimmungsresultat ist, dass die Änderungsrate nicht niedriger ist als der voreingestellte Ratenschwellenwert.

5. Verfahren nach einem der Ansprüche 1 bis 4, wobei das Steuerverfahren ferner Folgendes umfasst: Bestimmen, durch die Steueranordnung (6) nach dem Schritt eines Steuerns des elektronischen Expansionsventils (3), um Druck zu entlasten, ob das elektronische Expansionsventil (3) in einem vollständig geöffneten Zustand ist; Steuern des elektronischen Expansionsventils (3), um den vollständig geöffneten Zustand zu erreichen, wenn das Bestimmungsresultat ist, dass das elektronische Expansionsventil (3) nicht in dem vollständig geöffneten Zustand ist.

6. Steuerverfahren nach Anspruch 5, wobei der Kompressor (1) gesteuert wird, um eine Notfallschutzmaßnahme zu ergreifen, wenn das Bestimmungsresultat ist, dass sich das elektronische Expansionsventil (3) in dem vollständig geöffneten Zustand ist; wobei die Notfallschutzmaßnahme ein Steuern des Kompressors (1) umfasst, um den Betrieb anzuhalten oder eine Verdrängung durch die Steueranordnung (6) zu reduzieren.

7. Verfahren nach einem der Ansprüche 1 bis 6, wobei das erste Feineinstellungsverfahren Folgendes umfasst:

Erlangen, durch die Steueranordnung (6), einer Vorgabe des elektronischen Expansionsventils (3) anhand der folgenden Formel:

$$CTS = P \cdot e + \int I \cdot e \, dt + D \frac{de}{dt}$$

wobei CTS die einzustellende Vorgabe des elektronischen Expansionsventils (3) darstellt, P einen voreingestellten Proportionalitätskoeffizienten darstellt, I einen Integralkoeffizienten darstellt, D einen voreingestellten Differentialkoeffizienten darstellt, e einen Differenzwert zwischen einem aktuellen Kältemitteldruck des elektronischen Expansionsventils (3) und dem Steuerungs-Vorgabedruck darstellt und t Zeit darstellt; und

Steuerung, durch die Steueranordnung (6), der Öffnung des elektronischen Expansionsventils (3), um auf die Vorgabe eingestellt zu werden.

8. Verfahren nach einem der Ansprüche 1 bis 7, wobei das zweite Feineinstellungsverfahren Folgendes umfasst:

Erlangen, durch die Steueranordnung (6), einer Vorgabe des elektronischen Expansionsventils (3) anhand der folgenden Formel:

$$CTS = aP \cdot e + b \int I \cdot e \, dt + cD \frac{de}{dt}$$

wobei CTS die einzustellende Vorgabe des elektronischen Expansionsventils (3) darstellt, P einen Proportionalitätskoeffizienten darstellt, I einen Integralkoeffizienten darstellt, D einen Differentialkoeffizienten darstellt, e einen Differenzwert zwischen einem aktuellen Kältemitteldruck des elektronischen Expansionsventils (3) und dem Steuerungs-Vorgabedruck darstellt und t Zeit darstellt; und a einen Proportionalitäts-Verstärkungskoeffizienten darstellt, b einen Integral-Verstärkungskoeffizienten darstellt und c einen Differential-Verstärkungskoeffizienten darstellt, wobei jedes von a, b und c in einem Bereich von 1,5 bis 5 ist; und Steuerung, durch die Steueranordnung (6), der Öffnung des elektronischen Expansionsventils (3), um auf die Vorgabe eingestellt zu werden.

9. Steuerverfahren nach einem der Ansprüche 2 bis 8, wobei vor dem Schritt eines Erlangens einer Änderungsrate der Drehzahl des Kompressors (1) in Bezug auf die Zeit gemäß der Drehzahl des Kompressors (1) und des Bestimmens, ob die Änderungsrate niedriger ist als der voreingestellte Ratenschwellenwert, das Steuerverfahren ferner einen Schritt eines Initialisierens (S0) des elektronischen Expansionsventils (3) umfasst, und der Schritt eines Initialisierens des elektronischen Expansionsventils (3) Folgendes umfasst:

> Einschalten (S00) der Klimaanlage (100);
> Ausführen (S01) eines elektrischen Selbsttests an dem elektronischen Expansionsventil (3) durch die Steueranordnung (6); und Überholen (S02) des elektronischen Expansionsventils (3), wenn das elektronische Expansionsventil (3) den elektrischen Selbsttest nicht besteht; und Steuern (S03) des elektronischen Expansionsventils (3) durch die Steueranordnung (6), um es vollständig zu öffnen, wenn das elektronische Expansionsventil (3) den elektrischen Selbsttest besteht, und Steuern (S04) des elektronischen Expansionsventils (3), um es vollständig zu schließen, nachdem das elektronische Expansionsventil (3) vollständig geöffnet wurde; und
> Steuern (S05) des elektronischen Expansionsventils (3) durch die Expansionsventil-Steuereinheit, nachdem das elektronische Expansionsventil (3) vollständig geschlossen wurde, um auf eine voreingestellte Anfangsöffnung eingestellt zu werden, und die voreingestellte Anfangsöffnung 20 % bis 50 % einer maximalen Öffnung des elektronischen Expansionsventils (3) ist.

10. Steuerverfahren nach einem der Ansprüche 4 bis 9, wobei vor dem Schritt eines Erlangens der Änderungsrate der Drehzahl des Kompressors (1) in Bezug auf die Zeit gemäß der Drehzahl des Kompressors (1) und des Bestimmens, ob die Änderungsrate niedriger ist als der voreingestellte Ratenschwellenwert, das Steuerverfahren ferner einen Schritt eines Steuerns der Klimaanlage (100) zum Eintreten in eine Anfahr- und Absenktemperaturstufe (S1) durch die Steueranordnung (6) umfasst, und der Schritt eines Steuerns der Klimaanlage (100) zum Eintritt in die Anfahr- und Absenktemperaturstufe (S1) durch die Steueranordnung (6) Folgendes umfasst:

> Starten (S10) des Kompressors (1);
> Öffnen (S11) des elektronischen Expansionsventils (3) im Voraus auf eine voreingestellte Öffnung;
> Erfassen von Druckdaten des Kältemittels an einem Einlass des elektronischen Expansionsventils (3) oder vor dem Einlass des elektronischen Expansionsventils (3), und Übertragen (S12) eines elektrischen Signals der erfassten Druckdaten oder eines durch die erfassten Druckdaten umgewandelten elektrischen Signals an die Steueranordnung (6);

> Bestimmen (S13), durch die Steueranordnung (6), ob der aktuelle Kältemitteldruck niedriger ist als der voreingestellte Enddruck, der höher als eine Obergrenze des Alarmdruckbereichs ist; und dann Einstellen (S14) der Öffnung des elektronischen Expansionsventils (3) gemäß einem voreingestellten Schnelleinstellungsverfahren, wenn das Bestimmungsresultat ist, dass der aktuelle Kältemitteldruck niedriger ist als der voreingestellte Enddruck; und Steuern (S17) des elektronischen Expansionsventils (3), um den Druck zu entlasten, wenn das Bestimmungsresultat ist, dass der aktuelle Kältemitteldruck nicht niedriger ist als die Obergrenze des voreingestellten Enddrucks; und
> Bestimmen (S18), durch die Steueranordnung (6) nach dem Steuern des elektronischen Expansionsventils (3), um den Druck zu entlasten, ob das elektronische Expansionsventil (3) gegenwärtig in einem vollständig geöffneten Zustand ist; und Steuern (S19) des Kompressors (1), um eine Hochdruckschutzmaßnahme zu ergreifen, wenn das Bestimmungsresultat ist, dass das elektronische Expansionsventil (3) in dem vollständig geöffneten Zustand ist; und Steuern (S110) des elektronischen Expansionsventils (3), um in dem vollständig geöffneten Zustand zu sein, wenn das Bestimmungsresultat ist, dass das elektronische Expansionsventil (3) nicht in dem vollständig geöffneten Zustand ist.

11. Steuerverfahren nach Anspruch 10, wobei in der Anfahr- und Absenktemperaturstufe (S1) und der dynamischen Anpassungsstufe (S3) der Wert der voreingestellten Öffnung, auf den das elektronische Expansionsventil (3) im Voraus geöffnet wird, durch die folgende Formel berechnet wird: $F*(RPM_n-RPM_{n-1})/(t_n-t_{n-1})$, wobei eine Einheit Schritte sind, um die das elektronische Expansionsventil (3) bewegt wird; wobei F einen konstanten Vorwärtskopplungskoeffizienten darstellt und ein Bereich von F zwischen 0,0125 und 0,075 ist; $RPM_n$ eine aktuelle Drehzahl des getesteten Kompressors (1) darstellt und $t_n$ einen aktuellen Zeitmoment darstellt, und $RPM_{n-1}$ eine vorherige Drehzahl des Kompressors (1) darstellt und $t_{n-1}$ einen vorherigen Zeitmoment darstellt.

12. Steuerverfahren nach einem der Ansprüche 1 bis 11, wobei die Klimaanlage (100) eine Fahrzeugklimaanlage ist, die Kohlendioxid als Kältemittel verwendet, wobei in der Klimaanlage (100) ein Verdampfer als Kühlvorrichtung (4) verwendet wird und ein Gaskühler als Heizvorrichtung (2) verwendet wird.

**Revendications**

1. Procédé de commande pour un système de climatisation, dans lequel le système de climatisation (100) comprend un compresseur (1), un dispositif de refroidissement (4), un dispositif de chauffage (2), une vanne de détente électronique (3) et un ensemble de commande (6), l'ensemble de commande (6) est relié électriquement au compresseur (1), l'ensemble de commande (6) est relié électriquement à la vanne de détente électronique (3), et l'ensemble de commande (6) du système de climatisation (100) règle une ouverture de la vanne de détente électronique (3), le procédé de commande comprenant :

   l'acquisition de données de pression de fluide frigorigène et de données de température de l'air à une position prédéterminée dans le système de climatisation (100) à partir de positions prédéterminées du système de climatisation (100), et l'ensemble de commande (6) recevant des signaux électriques des données de pression de fluide frigorigène et des données de température de l'air acquises, ou des signaux électriques, convertis à partir des données de pression de fluide frigorigène et des données de température de l'air acquises ;
   l'acquisition, par l'ensemble de commande (6), d'une plage de pressions à réglage fin et d'une plage de pressions d'alerte de la vanne de détente électronique (3) en fonction du signal électrique lié aux données de température de l'air reçu par l'ensemble de commande (6), une limite supérieure de la plage de pressions à réglage fin étant inférieure ou égale à une limite inférieure de la plage de pressions d'alerte ;
   la détermination, par l'ensemble de commande (6), du fait que les données de pression de fluide frigorigène actuelle sont comprises ou non dans la plage de pressions à réglage fin, et le réglage d'une ouverture de la vanne de détente électronique (3) selon un premier procédé de réglage prédéfini par l'ensemble de commande (6), si le résultat de la détermination est que la pression de fluide frigorigène actuelle est comprise dans la plage de pressions à réglage fin ;
   la détermination, par l'ensemble de commande (6), du fait que les données de pression de fluide frigorigène actuelle sont comprises ou non dans la plage de pressions d'alerte, et le réglage de l'ouverture de la vanne de détente électronique (3) selon un second procédé de réglage prédéfini par l'ensemble de commande (6), si le résultat de la détermination est que la pression de fluide frigorigène actuelle est comprise dans la plage de pressions d'alerte ;
   dans lequel une vitesse de réglage de l'ouverture de la vanne de détente électronique (3) selon le second procédé de réglage est supérieure à une vitesse de réglage de l'ouverture de la vanne de détente électronique (3) selon le premier procédé de réglage ;
   la commande à la vanne de détente électronique (3) de relâcher la pression, si le résultat de la détermination est que la pression de fluide frigorigène actuelle dépasse une limite supérieure de la plage de pressions d'alerte.

2. Procédé de commande selon la revendication 1, dans lequel on détermine si la pression de fluide frigorigène actuelle est comprise ou non dans la plage de pressions d'alerte, si le résultat de la détermination est que la pression de fluide frigorigène actuelle dépasse une limite supérieure de la plage de pressions à réglage fin ;
   ou l'on détermine si la pression de fluide frigorigène actuelle est comprise ou non dans la plage de pressions à réglage fin, si le résultat de la détermination est que la pression de fluide frigorigène actuelle dépasse la limite inférieure de la plage de pressions d'alerte.

3. Procédé de commande selon la revendication 1 ou 2, dans lequel on acquiert, par l'ensemble de commande (6), une pression finale prédéfinie qui est supérieure à une limite supérieure de la plage de pressions d'alerte ;

   on détermine, par l'ensemble de commande (6), si la pression de fluide frigorigène actuelle est supérieure ou non à une pression finale prédéfinie, qui est supérieure à une limite supérieure de la plage de pressions d'alerte ;
   on détermine si la pression de fluide frigorigène actuelle est comprise ou non dans la plage de pressions d'alerte, si la pression de fluide frigorigène actuelle est inférieure à la pression finale prédéfinie ; et l'on détermine si la pression de fluide frigorigène actuelle est comprise ou non dans la plage de pressions à réglage fin, si la pression de fluide frigorigène actuelle est inférieure à la limite inférieure de la plage de pressions d'alerte.

4. Procédé de commande selon l'une quelconque des revendications 1 à 3, dans lequel, avant l'étape d'acquisition de données de pression de fluide frigorigène et de données de température de l'air à une position prédéterminée dans le système de climatisation (100) respectivement à partir de positions prédéterminées du système de climatisation (100), et de transmission de signaux électriques des données de pression de fluide frigorigène et des données de température de l'air acquises, ou de signaux électriques convertis à partir des données de pression de fluide frigorigène et des données de température de l'air acquises à l'ensemble de commande (6), le procédé de commande comprend en outre :

la temporisation par l'ensemble de commande (6), ou, la fourniture d'un temporisateur dans le système de climatisation (100) et la temporisation par le temporisateur ;
l'obtention d'un taux de changement d'une vitesse de rotation du compresseur (1) par rapport au temps en fonction de la vitesse de rotation du compresseur (1), et la détermination du fait que le taux de changement est inférieur ou non à une valeur seuil de taux prédéfinie ;
la commande au système de climatisation (100) d'entrer dans une phase de fonctionnement en régime permanent (S2) si le résultat de la détermination est que le taux de changement est inférieur à la valeur seuil de taux prédéfinie ; et
la commande au système de climatisation (100) d'entrer dans une phase de réglage dynamique (S3), et l'obtention, par l'ensemble de commande (6) selon la vitesse de rotation du compresseur (1) ou la vitesse de rotation du compresseur (1) et un programme intégré, d'une cible de l'ouverture par rapport à laquelle la vanne de détente électronique (3) doit être réglée, et la commande, par l'ensemble de commande (6), du réglage de la vanne de détente électronique (3) par rapport à la cible, ou l'envoi, par l'ensemble de commande (6), d'un signal de commande pour commander le réglage de la vanne de détente électronique (3) par rapport à la cible obtenue si le résultat de la détermination est que le taux de changement n'est pas inférieur à la valeur seuil de taux prédéfinie.

5. Procédé de commande selon l'une quelconque des revendications 1 à 4, le procédé de commande comprenant :
la détermination, par l'ensemble de commande (6) après l'étape de commande à la vanne de détente électronique (3) de relâcher la pression, du fait que la vanne de détente électronique (3) est ou non dans un état complètement ouvert ; la commande à la vanne de détente électronique (3) d'atteindre l'état complètement ouvert, si le résultat de la détermination est que la vanne de détente électronique (3) n'est pas dans l'état complètement ouvert.

6. Procédé de commande selon la revendication 5, dans lequel la commande au compresseur (1) de prendre une mesure de protection d'urgence si le résultat de la détermination est que la vanne de détente électronique (3) est dans l'état complètement ouvert ; la mesure de protection d'urgence comprenant la commande au compresseur (1) d'arrêter le fonctionnement ou réduire le déplacement par l'ensemble de commande (6).

7. Procédé de commande selon l'une quelconque des revendications 1 à 6, dans lequel le premier procédé de réglage comprend :

l'obtention, par l'ensemble de commande (6), d'une cible de la vanne de détente électronique (3) à l'aide de la formule suivante :

$$CTS = P \cdot e + \int I \cdot edt + D\frac{de}{dt}$$

dans laquelle CTS représente la cible de la vanne de détente électronique (3) à régler, P représente un coefficient de proportionnalité prédéfini, I représente un coefficient entier, D représente un coefficient différentiel prédéfini, e représente une valeur de différence entre une pression de fluide frigorigène actuelle de la vanne de détente électronique (3) et la pression cible de commande, et t représente le temps ; et
la commande, par l'ensemble de commande (6), du réglage de l'ouverture de la vanne de détente électronique (3) par rapport à la cible.

8. Procédé de commande selon l'une quelconque des revendications 1 à 7, dans lequel le second procédé de réglage comprend :

l'obtention, par l'ensemble de commande (6), d'une cible de la vanne de détente électronique (3) à l'aide de la formule suivante :

$$CTS = aP \cdot e + b\int I \cdot edt + cD\frac{de}{dt}$$

dans laquelle CTS représente la cible de la vanne de détente électronique (3) à régler, P représente un coefficient de proportionnalité, I représente un coefficient entier, D représente un coefficient différentiel, e représente une valeur de différence entre la pression de fluide frigorigène actuelle de la vanne de détente électronique (3) et la pression cible de commande, et t représente le temps ; et a représente un coefficient d'amplification de proportionnalité, b représente un coefficient d'amplification entier, et c représente un coefficient d'amplification différentiel, chacun parmi a, b et c est dans la plage comprise entre environ 1,5 et 5 ; et
la commande, par l'ensemble de commande (6), du réglage de l'ouverture de la vanne de détente électronique (3) par rapport à la cible.

9. Procédé de commande selon l'une quelconque des revendications 2 à 8, dans lequel, avant l'étape d'obtention d'un taux de changement de la vitesse de rotation du compresseur (1) par rapport au temps en fonction de la vitesse de rotation du compresseur (1), et de détermination du fait que le taux de changement est inférieur ou non à la valeur seuil de taux prédéfinie, le procédé de commande comprend en outre une étape d'initialisation (S0) de la vanne de détente électronique (3), et l'étape d'initialisation de la vanne de détente électronique (3) comprend :

la mise sous tension (S00) du système de climatisation (100) ;
la réalisation (S01) d'un auto-test électrique sur la vanne de détente électronique (3) par l'intermédiaire de l'ensemble de commande (6) ; et la révision (S02) de la vanne de détente électronique (3) si la vanne de détente électronique (3) ne réussit pas l'auto-test électrique ; et la commande (S03) à la vanne de détente électronique (3), par l'ensemble de commande (6), pour qu'elle soit complètement ouverte si la vanne de détente électronique (3) réussit l'auto-test électrique, et la commande (S04) à la vanne de détente électronique (3) pour qu'elle soit complètement fermée après que la vanne de détente électronique (3) a été complètement ouverte ; et la commande (S05) à la vanne de détente électronique (3), par l'unité de commande de vanne de détente après que la vanne de détente électronique (3) a été complètement fermée, pour qu'elle soit réglée à une ouverture initiale prédéfinie, et l'ouverture initiale prédéfinie représente 20 % à 50 % d'une ouverture maximale de la vanne de détente électronique (3).

10. Procédé de commande selon l'une quelconque des revendications 4 à 9, dans lequel, avant l'étape d'obtention du taux de changement de la vitesse de rotation du compresseur (1) par rapport au temps en fonction de la vitesse de rotation du compresseur (1), et de détermination du fait que le taux de changement est inférieur ou non à la valeur seuil de taux prédéfinie, le procédé de commande comprend en outre une étape de commande du système de climatisation (100) pour entrer dans une phase de démarrage et d'abaissement de la température (S1) par l'ensemble de commande (6), et l'étape de commande du système de climatisation (100) pour entrer dans la phase de démarrage et d'abaissement de la température (S1) par l'ensemble de commande (6) comprend :

le démarrage (S10) du compresseur (1) ;
l'ouverture (S11) de la vanne de détente électronique (3) de manière anticipée jusqu'à une ouverture prédéfinie ;
l'acquisition de données de pression du fluide frigorigène à une entrée de la vanne de détente électronique (3) ou avant l'entrée de la vanne de détente électronique (3), et la transmission (S12) d'un signal électrique des données de pression acquises ou d'un signal électrique converti par les données de pression acquises à l'ensemble de commande (6) ;
la détermination (S13), par l'ensemble de commande (6), du fait que la pression de fluide frigorigène actuelle est inférieure ou non à la pression finale prédéfinie supérieure à une limite supérieure de la plage de pressions d'alerte ; puis le réglage (S14) de l'ouverture de la vanne de détente électronique (3) selon un procédé de réglage rapide prédéfini si le résultat de la détermination est que la pression de fluide frigorigène actuelle est inférieure à la pression finale prédéfinie ; et la commande (S17) à la vanne de détente électronique (3) de relâcher la pression si le résultat de la détermination est que la pression de fluide frigorigène actuelle n'est pas inférieure à la limite supérieure de la pression finale prédéfinie ; et
la détermination (S18), par l'ensemble de commande (6) après avoir commandé à la vanne de détente électronique (3) de relâcher la pression, du fait que la vanne de détente électronique (3) est ou non actuellement dans un état complètement ouvert ; et la commande (S19) au compresseur (1) de prendre une mesure de protection à haute pression si le résultat de la détermination est que la vanne de détente électronique (3) est dans l'état complètement ouvert ; et la commande (S110) à la vanne de détente électronique (3) pour qu'elle soit dans l'état complètement ouvert si le résultat de la détermination est que la vanne de détente électronique (3) n'est pas dans l'état complètement ouvert.

11. Procédé de commande selon la revendication 10, dans lequel, à la phase de démarrage et d'abaissement de la température (S1) et à la phase de réglage dynamique (S3), la valeur de l'ouverture prédéfinie à laquelle la vanne de détente électronique (3) est ouverte à l'avance est calculée à l'aide de la formule suivante : $F*(RPM_n-RPM_{n-1})/(t_n-t_{n-1})$, une unité représentant les étapes de déplacement de la vanne de détente électronique (3) ; dans laquelle F représente un coefficient constant d'anticipation, et une plage de F est comprise entre 0,0125 et 0,075 ; $RPM_n$ représente une vitesse de rotation actuelle du compresseur (1) testé et $t_n$ représente un instant de synchronisation actuel, et $RPM_{n-1}$ représente une vitesse de rotation précédente du compresseur (1) et $t_{n-1}$ représente un instant de synchronisation précédent.

12. Procédé de commande selon l'une quelconque des revendications 1 à 11, dans lequel le système de climatisation (100) est un système de climatisation de véhicule utilisant le dioxyde de carbone comme fluide frigorigène, le système de climatisation (100) utilisant un évaporateur comme dispositif de refroidissement (4) et un refroidisseur de gaz comme dispositif de chauffage (2).

**Fig. 1**

initialization stage — S0

↓

startup and
pressure-lowering stage — S1

S2 — steady-state operation
stage ⟷ dynamic adjustment
stage — S3

**Fig. 2**

power on — S00

↓

whether the
electronic expansion valve
passes an
electric self-test — S01

No →

Yes ↓ — S03

fully open the electronic
expansion valve

overhaul the electronic
expansion valve — S02

↓ — S04

fully close the electronic
expansion valve

↓ — S05

open the electronic expansion
valve to a preset opening degree

↓ — S06

initialization finishes

**Fig. 3**

Fig. 4

S10 start the compressor

S11 open the electronic expansion valve by certain steps

S12 measure a refrigerating pressure

S13 whether the refrigerating pressure is lower than an ultimate pressure

No / Yes

S12 perform a quick adjustment to the electronic expansion valve

S15 whether a duration time of the quick adjustment reaches a preset time

No / Yes

S16 perform a fine adjustment to the electronic expansion valve

S17 relief the pressure of the electronic expansion valve

S18 whether the electronic expansion valve is fully opened

No / Yes

S110 fully open the electronic expansion valve

S19 activate other system protection measures

**Fig. 5**

```
                    ┌──────────────────┐  ── S30
                    │      start       │
                    └──────────────────┘
                             │
                    ┌──────────────────┐  ── S31
                    │ acquire rotational speed data │
                    │   of the compressor   │ ◄─────────────────────────────────────┐
                    └──────────────────┘                                            │
                             │                                                      │
                    ┌──────────────────┐  ── S32                                    │
                    │ open the electronic expansion │                               │
                    │  valve by certain steps │                                     │
                    └──────────────────┘                                            │
                             │                                                      │
                    ┌──────────────────┐  ── S33                                    │
                    │ acquire temperature data and │                                │
                    │     pressure data     │                                       │
                    └──────────────────┘                                            │
                             │                                                      │
                    ┌──────────────────┐  ── S34                                    │
                    │ set various pressure ranges of │                              │
                    │ the electronic expansion valve │                             │
                    └──────────────────┘                                            │
                             │                                                      │
```

Whether pressure at an outlet of the electronic expansion valve is in a fine adjustment pressure range  — S35

the electronic expansion valve activates a protection control  — S37

whether the pressure at the outlet of the electronic expansion valve is in an alert pressure range  — S38

relief the pressure of the electronic expansion valve  — S310

whether the electronic expansion valve is fully opened  — S311

fully open the electronic expansion valve  — S313

perform the fine adjustment to the electronic expansion valve  — S36

perform the quick adjustment to the electronic expansion valve  — S39

activate other system protection control measures  — S312

No  Yes  No  Yes  No  Yes

**Fig. 6**

**Fig. 7**

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010064723 A1
- WO 2014117721 A1